Europäisches Patentamt

European Patent Office

Office européen des brevets

(11) Publication number: 0 273 516
A2

# (12) EUROPEAN PATENT APPLICATION

(21) Application number: 87202535.8

(22) Date of filing: 15.12.87

(51) Int. Cl.⁴: **H01B 3/44** , C08L 53/02 ,
C08K 3/00

(30) Priority: 29.12.86 US 947126
29.12.86 US 947054

(43) Date of publication of application:
06.07.88 Bulletin 88/27

(84) Designated Contracting States:
BE DE FR GB IT NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Icenogle, Ronald Dean
South 2931 Howard
Spokane Washington 99203-1747(US)
Inventor: Djiauw, Lie Khong
8130 Silent Cedars Drive
Houston Texas 77095(US)

(74) Representative: Aalbers, Onno et al
P.O. Box 302
NL-2501 CH The Hague(NL)

(54) Low smoke polypropylene insulation compositions and process for the preparation therefor.

(57) A flame retardant insulation composition comprising a functionalized selectively hydrogenated monoalkenyl arene-conjugated diene block copolymer, a plasticizer, polypropylene and a hydrated inorganic filler, and process for the preparation thereof by blending these four components.

EP 0 273 516 A2

# LOW SMOKE POLYPROPYLENE INSULATION COMPOSITIONS AND PROCESS FOR THE PREPARATION THEREFOR

The invention relates to a flame retardant insulation composition and to a process for the preparation thereof.

The most common method for reducing the flammability of wire and cable insulation and jacketing materials is the use of an organic bromine or chlorine compound along with antimony oxide. This system is very effective as a flame retardant, but such materials produce a dense black smoke when burned, and also produce hydrogen chloride or hydrogen bromide, which are both corrosive and toxic. Because of this, there has been a great deal of interest in flame retarded systems that produce lower amounts of smoke and toxic and corrosive gases when they are burned. There appear to be two main approaches that are being followed to meet this goal. The first is to eliminate halogens from the system and use instead large loadings of alumina trihydrate, another common fire retardant, or the similar filler magnesium hydroxide. The second is to develop additives that reduce the smoke and acid gas production of the halogenated systems. In addition to low smoke low toxicity these compositions must also have attractive physical properties in order to be used for wire and cable applications. These properties include hardness, abrasion resistance, environmental stability, deformation resistance, low temperature flexibility, oil resistance and good electrical properties. At present there are no low-smoke, low-toxicity, flame-retardant materials which are readily available although some new materials including metal hydrate filled polyethylene are becoming available.

Metal hydrates such as alumina trihydrate and magnesium hydroxide contain water bonded to a crystal structure with the metal atom. When heated to a sufficiently high temperature these compounds decompose and release water which subsequently vaporizes. This process of decomposition and vaporization absorbs heat, thus slowing down the initial heating of the insulation material and consequently slows down the subsequent burning of the material. After this cooling effect is overwhelmed however, the presence of the metal hydrates has little effect on the subsequent process of burning. Unlike the halogenated flame retardant composition, metal hydrate compositions with non-halogenated polyolefins break down quickly into monomer units and burn relatively cleanly without a great deal of smoke production. In addition, since metal hydrates only add water to the system, they should not increase the emission of toxic or corrosive gases beyond what already would be produced by the system.

Polypropylene, which is readily available at a reasonable cost, has found many industrial uses because of its desirable physical properties, such as ease of fabrication by all conventional methods; high melting point of stereoregular, e.g., isotactic, polypropylene and compatibility with many other commercial resins, which permits a large number of blends having specific properties. Brittleness in these compositions can be reduced either by copolymerizing propylene with ethylene to form block copolymers or by blending homopolypropylene with rubbers.

It is well known in the art that physical properties of these blends can be greatly enhanced by the incorporation of hydrogenated monoalkenyl arene-conjugated diene block copolymers.

It has now been found that the presence of a modified (functionalized) block copolymer in a self-entinguishing, low smoke insulation composition which is halogen free greatly enhances the physical properties of these blends, particularly the stress at break and the ultimate elongation, whilst the blends are relatively easy to process, have good flame retardancy and give a low production of toxic and corrosive gases when burned. It is believed that the functionalized block copolymer provides for bonding between the polymer matrix and the filler.

Accordingly, the invention provides a flame retardant insulation composition comprising a functionalized selectively hydrogenated monoalkenyl arene-conjugated diene block copolymer, a plasticizer, polypropylene and a hydrated inorganic filler.

The flame retardant insulation composition according to the present invention preferably comprises:

(a) in the range of from 5 to 40 per cent by weight of a hydrogenated monoalkenylarene (A)-conjugated diene (B) block copolymer containing at least two A blocks and at least one B block or an AB diblock copolymer in both of which polymers at least 1 per cent by weight of said block copolymer has been functionalized;

(b) in the range of from 1 to 20 per cent by weight of the plasticizer;

(c) in the range of from 1 to 40 per cent by weight of polypropylene;

(d) in the range of from 10 to 85 per cent by weight of the hydrated inorganic filler, said percentages being calculated on the total of the composition and the total of the percentages being 100.

The compositions according to the present invention are prepared by combining the required components in the correct porportions in conventional blending equipment such as a rubber mill or mixer, for example, a Banbury mixer. This is usually done above the melting temperature of the polymeric materials.

Block copolymers of selectively hydrogenated mono-alkenyl arene-conjugated dienes which may be utilized include any of those which exhibit elastomeric properties and those which have 1,2-microstructure contents prior to hydrogenation of from about 7% to 100%. Such block copolymers may be multiblock copolymers of varying structures containing various ratios of conjugated dienes to alkenyl arene hydrocarbons including those containing up to 60 per cent by weight of alkenyl arene hydrocarbon, for example vinyl aromatic hydrocarbon. Thus, multiblock copolymers may be utilized which are linear or radial symmetric or asymmetric and which have structures represented, for example, by the formulae, A-B, A-B-A, A-B-A-B, B-A, B-A-B and $(AB)_{0-50}BA$ wherein A is a polymer block of a vinyl aromatic hydrocarbon or a conjugated diene/vinyl aromatic hydrocarbon tapered copolymer block and B is a polymer block of a conjugated diene.

The block copolymers may be produced by any well known block polymerization or copolymerization procedures including the well known sequential addition of monomer techniques, incremental addition of monomer technique or coupling technique as illustrated in, for example, U.S. patent specifications 3,251,905; 3,390,207; 3,598,887 and 4,219,627. As is well known in the block copolymer art, tapered copolymer blocks can be incorporated in the multiblock copolymer by copolymerizing a mixture of conjugated diene and vinyl aroamtic hydrocarbon monomers utilizing the difference in their copolymerization reactivity rates. Various patent specifications concern the preparation of multiblock copolymers containing tapered copolymer blocks including U.S. patent specifications 3,251,095; 3,265,765; 3,639,521 and 4,208,356 the disclosures of which are incorporated herein by reference.

Conjugated dienes which may be utilized to prepare the polymers and copolymers are those having in the range of from 4 to 8 carbon atoms per molecule and include, for example, 1,3-butadiene, 2-methyl-1,3-butadiene(isoprene), 2,3-dimethyl-1,3-butadiene, 1,3-pentadiene and 1,3-hexadiene. Mixtures of such conjugated dienes may also be used. The preferred conjugated diene is 1,3-butadiene.

Vinyl aromatic hydrocarbons which may be utilized to prepare copolymers include, for example, styrene, o-methylstyrene, p-methylstyrene, p-tert-butylstyrene, 1,3-dimethylstyrene, alpha-methylstyrene, vinylnaphthalene and vinylanthracene. The preferred vinyl aromatic hydrocarbon is styrene.

It should be observed that the above-described polymers and copolymers may, if desired, be readily prepared by the methods set forth above. However, since many of these polymers and copolymers are commercially available, it is usually preferred to employ the commercially available polymer as this serves to reduce the number of processing steps involved in the overall process. The selective hydrogenation of these polymers and copolymers may be carried out by a variety of well established processes including hydrogenation in the presence of such catalysts as Raney Nickel, noble metals such as, for example, platinum and palladium, and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the presence of a soluble hydrogenation catalyst. Such processes are disclosed in U.S. patent specifications 3,113,986 and 4,226,952, the disclosures of which are incorporated herein by reference. The polymers and copolymers are hydrogenated in such a manner as to produce hydrogenated polymers and copolymers having a residual unsaturation content in the polydiene block of from 0.5 to 20 per cent of their original unsaturation content prior to hydrogenation.

These block copolymers can be functionalized as described in U.S. patent specification 4,578,429, which is hereby incorporated by reference, or by other methods which are well known in the prior art, as described, for example, in U.S. patent specifications 4,292,414 and 4,427,828. The functionalized block copolymer is a thermally stable modified selectively hydrogenated high 1,2 content block copolymer wherein at least one acid compound is grafted to the block copolymer (base polymer).

More preferably, the functionalized block copolymer is a functionalized selectively hydrogenated block copolymer selected from the group consisting of AB diblock copolymers and multiblock copolymers having at least two blocks A and at least one block B to which has been grafted an acid compound or a derivative thereof wherein,

1) each A is predominantly a polymerized monoalkenyl aromatic hydrocarbon block having an average molecular weight in the range of from 2,000 to 115,000;

2) each B is predominantly a polymerized conjugated diene hydrocarbon block having an average molecular weight in the range of from 20,000 to 450,000;

3) the blocks A constituting in the range of from 5 to 95 weight per cent of the copolymer;

4) the unsaturation of the block B is reduced to less than 10% of the original unsaturation;

5) the unsaturation of the A blocks is above 50% of the original unsaturation.

The preferred modifying monomers for use in functionalization include unsaturated mono-and polycarboxylic-containing acids ($C_3$-$C_{10}$) with preferably at least one olefinic unsaturation, and anhydrides, salts, esters, amides, thiols, thioacids, glycidyl, hydroxy, glycol, and other substituted derivatives from said acid.

Examples of such acids, anhydrides and derivatives thereof include maleic acid, fumaric acid, itaconic acid, citraconic acid, acrylic acid, glycidyl acrylate, cyanoacrylates, hydroxy $C_1$-$C_{20}$ alkyl methacrylates, acrylic polyethers, acrylic anhydride, methacrylic acid, crotonic acid, isocrotonic acid, mesaconic acid, angelic acid, maleic anhydride, itaconic anhydride, citraconic anhydride, sodium acrylate, calcium acrylate, and magnesium acrylate.

Other monomers which can be used either by themselves or in combination with one or more of the carboxylic acids or derivatives thereof include, for example, $C_2$-$C_{50}$ vinyl monomers such as acrylamide, and monovinyl aromatic compounds, i.e. styrene, chlorostyrenes, bromostyrenes, α-methyl styrene and vinyl pyridenes.

Other monomers which can be used are $C_4$ to $C_{50}$ vinyl esters, vinyl ethers and allyl esters, such as, for example, vinyl butyrate, vinyl laurate, vinyl stearate and vinyl adipate and monomers having two or more vinyl groups, such as divinylbenzene, ethylene dimethacrylate, triallyl phosphite, dialkylcyanurate and triallyl cyanurate.

The preferred monomers to be grafted to the block copolymers present in the composition according to the present invention are maleic anhydride, maleic acid, fumaric acid and their derivatives. It is well known in the art that these monomers do not polymerize easily.

Of course, mixtures of monomer can be also added so as to achieve graft copolymers in which the graft chains contain at least two different monomers (in addition to the base polymer monomers). The functionalized block copolymers can be added to the blend as described or cut back with up to 75% by weight of an unfunctionalized block copolymer.

The polypropylene is preferably a homopolypropylene. The homopolypropylene preferably should be isotactic and may be, for example, of the type corresponding to those known under the trade names Shell PP-5944 S, PP-5520 and PP DX-5088, available from Shell Chemical Company, Houston, Texas. Most commercial isotactic polypropylenes are suitable in the compositions of the present invention. Syndiotactic homopolymers also can be used. Modified polypropylenes, for example, maleic anhydride functionalized polypropylene of the type corresponding to that known under the trade name Plexar 2110, available from Northern Petrochemical Company, Rolling Meadows, Illinois, may also be used in the compositions of the present invention. The functionalized polypropylenes are readily prepared according to procedures described in U.S. patent specifications 3,480,580 or 3,481,910, which are hereby incorporated by reference.

The fillers present in the compositions according to the present invention are the hydrated inorganic fillers, e.g. hydrated aluminium oxides ($Al_2O_3$ $3H_2O$ or $Al(OH)_3$) hydrated magnesia, hydrated calcium silicate and zinc borate. Of these compounds, the most preferred are hydrated aluminium oxide and magnesium hydroxide.

Alumina trihydrate is generally more effective as a flame retardant than is magnesium hydroxide due to the greater amount of water incorporated in that filler, however, magnesium hydroxide has specific advantages, for example, better processability when incorporated into a polyolefin composition and a higher decomposition temperature than alumina trihydrate (330°C versus 230°C). This increase decomposition temperature allows a flame retardant polymer composition containing magnesium hydroxide to be processed at a higher temperature than a compound with alumina trihydrate. The higher processing temperatures allow much faster processing due to lower viscosities.

It has been found however that conventional magnesium hydroxide fillers cannot be sucessfully blended into rubber modified polypropylene compositions. These compositions when filled to a reasonable loading of magnesium hydroxide cannot be processed due to agglomeration of the filler particles. Accordingly, it would be desirable to provide a magnesium hydroxide filler which would not adversely affect the processability by agglomeration. Therefore, the magnesium hydroxide filler is preferably surface treated with a coupling agent, so as to prevent agglomgeration of the particles. When agglomeration occurs the effective particle size of the filler is increased dramatically and therefore the processability and the properties of the end product are degraded.

If desired, hydrated inorganic fillers other than magnesium hydoxide may also be surface treated with a coupling agent prior to blending to enhance the bonding between the functionalized polypropylene and the filler. Coupling agents may include fatty acid metal salts, for example oleates and stearates; silanes, maleates, titanates and zircoaluminates.

The filler particle size is relatively non-important and may be in accordance with those sizes used by the prior art. Preferred particle sizes are less than 5 μm.

It has also been found that magnesium hydroxide fillers with a high aspect ratio crystallate shape and larger size are also less likely to agglomerate than those with a lower aspect ratio. Aspect ratios for the crystallites should be greater than 4 and mean secondary particle (agglomerate) size should be less than three μm.

In addition, the present composition contains plasticizers, for example, styrene butadiene diblock copolymers and saturated hydrocarbon or mineral oils, hydrogenated or saturated hydrocarbon resins. Aliphatic oils and resins are preferred to aromatic oils and resins since aromatics tend to cyclicize resulting in colour bodies. Preferred oils are primarily aliphatic, saturated mineral oils. Preferred resins are saturated or hydrogenated hydrocarbon resins, such as hydrogenated polymers of dienes and olefins. These additional components must be compatible with the block copolymer component. The selection of the other components depends upon a number of factors, for example, the method for coating a wire.

The compositions may be modified with supplementary materials such as stabilizers and oxidation inhibitors. Stabilizers and oxidation inhibitors are typically added to the compositions to protect the polymers against degradation during preparation and use of the composition. Combinations of stabilizers are often more effective, due to the different mechanisms of degradation to which various polymers are subject. Certain hindered phenols, organo-metallic compounds, aromatic amines and sulphur compounds are useful for this purpose. Especially effective types of these materials include the following:-

1. Benzothiazoles, such as 2-(dialkyl-hydroxybenzylthio) benzothiazoles.

2. Esters of hydroxybenzyl alcohols, such as benzoates, phthalates, stearates, adipates or acrylates of 3,5-dialkyl-1-hydroxy-benzyl alcohols.

3. Stannous phenyl catecholates.

4. Zinc dialkyl dithiocarbamates.

5. Alkylphenols, e.g., 2,6-di-tert-butyl-4-methylphenol.

6. Dilaurylthio-dipropionate (DLTDP). Examples of commercially available antioxidants are "Ionox 220" (a trade name for 4,4-methylene-bis-(2,6-di-t-butyl-phenol) and "Ionox 330" (a trade name for 3,4,6-tris(3,5-di-t-butyl-p-hydroxybenzyl)-1,3,5-trimethylbenzene), "Dalpac 4C" (a trade name for 2,6-di-(t-butyl)-p-cresol), "Naugawhite" (a trade name for alkylated bisphenol), "Butyl Zimate" (a trade name for zinc dibutyl dithiocarbamate), and "Agerite Geltrol" (a trade name for alkylated-arylated bisphenolic phosphite). From about 0.01 per cent to about 5.0 percent by weight of one or more antioxidants is generally added to the composition. Table 1 hereinafter states the preferred and most preferred contents in which components (a), (b), (c) and (d) are present in the compositions according to the invention.

## TABLE I

| | Preferred % | Most Preferred % |
|---|---|---|
| Block Copolymer (a) (Modified + unmodified) | 10-30 | 15-20 |
| Plasticizer (oil) (b | 2-15 | 4-8 |
| Polypropylene (c) | 2-20 | 4-8 |
| Filler (d) | 40-75 | 63-75 |

The particular amounts of each component may vary somewhat in the resultant composition depending on the components employed and their relative amounts.

The invention also provides a process for the preparation of a flame retardant insulation composition according to the present invention which process comprises blending a functionalized selectively hydrogenated mono-alkenyl arene-conjugated diene block copolymer, a plasticizer, polypropylene and a hydrated inorganic filler.

The particular method of preparing the compositions and manufacturing the insulated or jacketed wire and/or cable which are the subject of the present invention is not critical and any of a number of commercially known techniques may be employed both for blending and extruding the modified block copolymer-polypropylene compositions and forming the jacketed and/or insulated wire and/or cable.

The method used to form the blend is not critical provided the polymers are homogeneously dispersed. Incomplete mixing results in the formation of aggregates which impair the physical properties of the blend.

The following Examples further illustrate the invention.

### Examples 1-5 and Comparative Experiments A and B

The components used were as follows:

Block Copolymer 1 is a styrene-ethylene/butylene-styrene block copolymer with GPC block molecular weights of 29,000-125,000-29,000.

Block Copolymer 3 is a styrene-ethylene/butylene-styrene block copolymer with GPC block molecular weights of 7,000-35,000-7,000.

The modified block copolymer is a styrene-ethylene/butylene-styrene block copolymer with GPC block molecular weights of 7,000-35,000-7,000 which has been grafted with 1.3 weight per cent of maleic anyhdride.

The oil was one known under the trade name Penreco 4434, available from Penreco Company. The polypropylene was homopolypropylene known under the trade name PP 5088 or PP 5944 from Shell Chemical Company. The ATH was alumina trihydrate, 1.0 $\mu$m precipitated Hydral 710B from Alcoa. ("Hydral" is a trade name). The Epoxy was EPON 1004 from Shell Chemical Company ("EPON" is a trade name).

Irganox 1010; a trade name for tetra-bismethylene 3-(3,5-ditertbutyl-4 hydroxyphenyl)-propionate methane from Ciba-Geigy.

Irganox MD-1024; a trade name of a stabilizer from Ciba-Geigy.

Plastanox, a trade name for dilaurylthio-dipropionate (DLTDP), available from American Cyanamid.

Compositions are in per cent by weight.

Examples were extruded insulation coating on 18AWG solid conductor 0.76 mm samples. All insulation coatings were conducted at 190 °C melt temperature. The results are presented in Table II.

Comparative Experiments A and B show properties for compositions not according to the invention, without modified block copolymer present in the composition. These compositions had unsatisfactory stress at break and elongation at break properties. The examples 1 to 5, which are according to the invention, contained modified block copolymer and showed outstanding and unexpected physical properties plus good processability. The stress at break and elongation at break properties improved from unusable to outstanding.

## TABLE II

| Compartive Experiment Example | A | B | 1 | 2 | 3 | 4 | 5 |
|---|---|---|---|---|---|---|---|
| 1651 Block Copolymer 1 | -- | -- | -- | -- | 11.40 | 10.40 | 8.40 |
| 1652 Block Copolymer 3 | 13.51 | 14.00 | -- | -- | -- | -- | -- |
| Modified Block Copolymer | -- | -- | 14.00 | 13.51 | 10.00 | 10.00 | 10.00 |
| Oil | 3.38 | 3.50 | 3.50 | 3.38 | 5.00 | 5.00 | 5.00 |
| Polypropylene 5088 | -- | 14.00 | 14.00 | -- | 5.00 | 5.00 | 5.00 |
| Polypropylene 5944 | 13.51 | -- | -- | 13.51 | -- | -- | -- |
| ATH | 68.00 | 66.75 | 66.75 | 68.00 | 68.00 | 68.00 | 68.00 |
| Irganox 1010 | 0.10 | 0.05 | 0.05 | 0.10 | 0.10 | 0.10 | 0.10 |
| Irganox 1024 | 0.10 | 0.05 | 0.05 | 0.10 | 0.10 | 0.10 | 0.10 |
| DLTDP | 0.40 | 0.15 | 0.15 | 0.40 | 0.40 | 0.40 | 0.40 |
| Epoxy | 1.0 | 1.5 | 1.5 | 1.0 | 0 | 1.0 | 3.0 |
| | | | | | | | |
| Stress Break (MPa) | 4.14 | 5.17 | 17.2 | 18.3 | 15.9 | 14.3 | 13.5 |
| Elongation at Break (%) | 0 | 20 | 50 | 90 | 110 | 130 | 146 |
| | | | | | | | |
| Screw Speed (RPM)[1] | 20 | 20 | 20 | 20 | 20 | 20 | 20 |
| Power Input (A) | 18 | -- | 13.5 | 16 | 24.5 | 24 | 5 |
| Limiting Oxygen Index % | -- | 28.8 | 31.0 | -- | 32.0 | -- | 35.5 |

1) revolutions per minute

0 273 516

## Example 6 and 7 and Comparative Experiments C and D

The components used were as follows:

Block Copolymer 1, the modified block copolymer, the oil, the ATH, Irganox 1010, Irganox 1024 and the DLTDP were the same as used in Examples 1-5.

The polypropylene was homopolypropylene PP 5520 or PP 5944 from Shell Chemical Company. The modified polypropylene was a maleic anhydride functionalized polypropylene, known under the trade name Plexar 2110, from Northern Petrochemical Company in Rolling Meadows, Illinois, USA. The $Mg(OH)_2$ was from Ventron Division of Morton Thiokol Inc. with a secondary particle size of about 4 μm. The surface treated $Mg(OH)_2$, known under the trade name Kisuma 5B was from Kyowa Chemical Industry Ltd., which is oleate treated and has an average secondary (aggregate) particle size of 0.8 μm.

Compositions are in per cent by weight.

Examples and Comparative Experiments were extruded insulation coating on 18AWG solid conductor 0.76 mm samples. All insulation coatings were conducted at 190 °C melt temperature.

Comparative Experiment C shows that a blend of block copolymer with polypropylene could not be blended or extruded because of the $Mg(OH)_2$. Comparative Experiment D was easily processed even though about 30% less polypropylene was incorpated; the blend however had an unacceptable stress at break. Examples 6 and 7 both showed acceptable properties however Example 7 with treated $Mg(OH)_2$ according to the present invention was much more easily processed than Example 6 containing ATH as indicated by the 50% decrease in power input to the extruder.

## TABLE III

| Compartive Experiment Example | C | D | 6 | 7 |
|---|---|---|---|---|
| 1651 Block Copolymer 1 | 14.7 | 16.00 | 11.40 | 4.7 |
| Modified Block Copolymer | — | — | 10.00 | 10.00 |
| Oil | 7.35 | 8.00 | 5.00 | 7.35 |
| Polypropylene 5944 | — | 5.00 | — | — |
| Polypropylene 5520 | — | — | 5.00 | 7.35 |
| Modified Polypropylene | 7.35 | — | — | — |
| ATH | — | — | 68.00 | — |
| Mg(OH)$_2$ | 70.00 | 70.40 | — | 70.00 |
| Surface Treated Mg(OH)$_2$ | — | — | — | — |
| Irganox 1010 | 0.10 | 0.25 | 0.10 | 0.10 |
| Irganox 1024 | 0.10 | 0.10 | 0.10 | 0.10 |
| DLTDP | 0.40 | 0.25 | 0.40 | 0.40 |
| Stress Break (MPa) | * | 2.76 | 15.9 | 10.0 |
| Elongation at Break (%) | * | 370 | 110 | 120 |
| Line speed (FPM(1) | * | 250 | — | — |
| Screw Speed (RPM) 1) | * | 150 | 20 | 30 |
| Power Input (A) | * | 10 | 24.5 | 12.5 |
| Head Pressure (MPa) | * | 9.25 | — | 19.3 |
| Limiting Oxygen Index % | * | 31.0 | 32.0 | 28.5 |

\* Could not be coated
1) revolutions per minute

## Claims

1. A flame retardant insulation composition comprising a functionalized selectively hydrogenated monoalkenyl arene-conjugated diene block copolymer, a plasticizer, polypropylene and a hydrated inorganic filler.

2. A flame retardant insulation composition as claimed in claim 1 comprising:

(a) in the range of from 5 to 40 per cent by weight of a hydrogenated monoalkenylarene (A)-conjugated diene (B) block copolymer containing at least two A blocks and at least one B block or an AB diblock copolymer in both of which polymers at least 1 per cent by weight of said block copolymer has been functionalized;

(b) in the range of from 1 to 20 per cent by weight of the plasticizer;

(c) in the range of from 1 to 40 per cent by weight of polypropylene;

(d) in the range of from 10 to 85 per cent by weight of the hydrated inorganic filler,

said percentages being calculated on the total of the composition and the total of the percentages being 100.

3. A composition as claimed in claim 2 which comprises in the range of from 15 to 20 per cent (a), in the range from 4 to 8 per cent (b) in the range of from 4 to 8 per cent (c) and in the range of from 63 to 75 per cent (d), said percentages being calculated on the total of the composition and the total of the percentages being 100.

4. A composition as claimed in any one of the preceding claims wherein the functionalized block copolymer is a functionalized hydrogenated styrene butadiene styrene block copolymer.

5. A composition as claimed in any one of the preceding claims wherein the functionalized block copolymer is functionalized with an acid or a derivative of an acid.

6. A composition as claimed in claim 5 wherein the functionalized block copolymer is functionalized with maleic anhydride.

7. A composition as claimed in any one of the preceding claims wherein

1) each A is predominantly a polymerized monoalkenyl aromatic hydrocarbon block having an average molecular weight in the range of from 2,000 to 115,000;

2) each B is predominantly a polymerized conjugated diene hydrocarbon block having an average molecular weight in the range of from 20,000 to 450,000;

3) the blocks A constituting in the range of from 5 to 95 weight per cent of the copolymer;

4) the unsaturation of the block B is reduced to less than 10% of the original unsaturation;

5) the unsaturation of the A blocks is above 50% of the original unsaturation.

8. A composition as claimed in any one of the preceding claims wherein the unfunctionalized block copolymer is a styrene-ethylene/butylene-styrene block copolymer.

9. A composition as claimed in any one of the preceding claims wherein the plasticizer is a mineral oil.

10. A composition as claimed in any one of claims 1 to 8 wherein the plasticizer is a styrene butadiene diblock copolymer.

11. A composition as claimed in any one of the preceding claims, in which the polypropylene is a homopolypropylene.

12. A composition as claimed in any one of the preceding claims, in which the filler is alumina trihydrate.

13. A composition as claimed in any one of claims 1 to 11 in which the filler is a hydrated magnesium hydroxide which has been surface treated with a coupling agent.

14. A composition as claimed in claim 13 in which the hydrated magnesium hydroxide has a mean secondary particle size in the range of from 0.6 to 1.2 $\mu$m.

15. A composition as claimed in claim 13 or 14 in which the coupling agent is a fatty acid metal salt, an oleate, a stearate, a maleate, a silane, a titanate or a zirco-aluminate.

16. A composition as claimed in any one of claims 13 to 15 in which the hydrated magnesium hydroxide has a crystalline aspect ratio greater than 4.

17. An article whenever containing a composition as claimed in any one of the preceding claims.

18. A process for the preparation of a flame retardant insulation composition as claimed in any one of the preceding claims which process comprises blending a functionalized selectively hydrogenated monoalkenyl arene-conjugated diene block copolymer, a plasticizer, polypropylene and a hydrated inorganic filler.